# EUROPEAN PATENT SPECIFICATION

(11) **EP 3 187 374 B1**
(45) Date of publication and mention of the grant of the patent: **30.01.2019**
(21) Application number: 16207429.8
(22) Date of filing: 29.12.2016
(51) Int. Cl.: B60R 7/04

(54) **CONVERTIBLE OBJECT-HOLDER DEVICE**
VERWANDELBARE OBJEKTHALTERVORRICHTUNG
DISPOSITIF PORTE-OBJET CONVERTIBLE

(30) Priority: 29.12.2015 IT UB20159225
(43) Date of publication of application: 05.07.2017
(73) Proprietor: FCA Italy S.p.A., 10135 Torino (IT); LEVA S.p.A. A SOCIO UNICO, 10095 Grugliasco (TO) (IT)
(72) Inventor: L'ALTRELLA, Martino, 10135 Torino (IT); MELIS, Silvio, 10135 Torino (IT); MANIGRASSO, Edoardo, 10135 Torino (IT); LUCCHESI, Marco, 10035 Torino (IT); RUSSO, Alberto, 10095 Grugliasco (IT)
(74) Representative: Lovino, Paolo

(56) References cited:
- WO-A1-88/00895
- WO-A1-2011/126426
- FR-A3- 2 562 486

## Description

The present invention relates to a convertible object-holder device. By way of example, the present invention relates to an object-holder device provided on the dashboard of a motor vehicle.

As is known, the passenger compartment and the boot of motor vehicles are provided with object-holder devices, such as pockets, drawers, shelves and doors, in which relatively small objects (bottles, sheets, pens, mobile phone, etc.) can be stowed. For example, these devices can be provided on the dashboard, in the door panels, in the tunnel console, behind the seats, on the sides of the boot, etc.

There is a need to provide an object-holder device which is convertible between a first operating condition, in which it defines an inner compartment accessible by a user, and a second operating condition, in which it defines a lining that serves as a simple cover, so as to completely eliminate this compartment and take up as little space as possible. In other words, there is a need to obtain a concealed object-holder compartment.

A solution of this type is known for example from EP1861289, in which a fabric has an elastic band embedded therein, the band defining two stable configurations, with opposite curvatures, corresponding to the two operating conditions indicated above. When the elastic band is curved so as to stretch the fabric and form a pocket, the latter has a top access opening that is permanently open, so that the objects stowed in this pocket are visible from the outside of the motor vehicle. Instead, it is preferable to hide the objects in an object-holder drawer which can be completely closed, especially if such drawer is to be provided on the dashboard of the motor vehicle.

Another prior solution, which corresponds to the preamble of claim 1, is known from WO2011126426A1.

The object of the present invention is to provide a convertible object-holder device, which allows the requirements outlined above to be met in a simple and inexpensive way, and which, preferably, can be removed from a motor vehicle so as to be used as a bag and/or be positioned interchangeably in different areas of the motor vehicle.

According to the present invention, a convertible object-holder device is provided as defined in claim 1.

For a better understanding of the present invention, a preferred embodiment thereof will now be described, purely by way of a non-limiting example, with reference to the accompanying drawings, wherein:
- Figure 1 is a top perspective view of a preferred embodiment of the convertible object-holder device according to the present invention;
- Figures 2 to 5 are a sequence of images that show the device of Figure 1 during transition to a different operating condition;
- Figures 6 and 7 are similar to Figure 5, and they show an opening operation to access an inner compartment in the device of the present invention;
- Figure 8 is similar to Figure 5, and it shows, in enlarged scale and with parts removed for clarity, a detail of the device of the present invention;
- Figures 9 and 10 are perspective views which show the integration of the device of the present invention in the dashboard of a motor vehicle;
- Figure 11 is a cross section along the section plane indicated by the line XI-XI in Figure 10;
- Figures 12 and 13 are perspective views which show the integration of the device of the present invention in an inner panel of a lateral door of a motor vehicle; and
- Figures 14 and 15 are perspective views which show the integration of the device of the present invention in the boot of a motor vehicle.

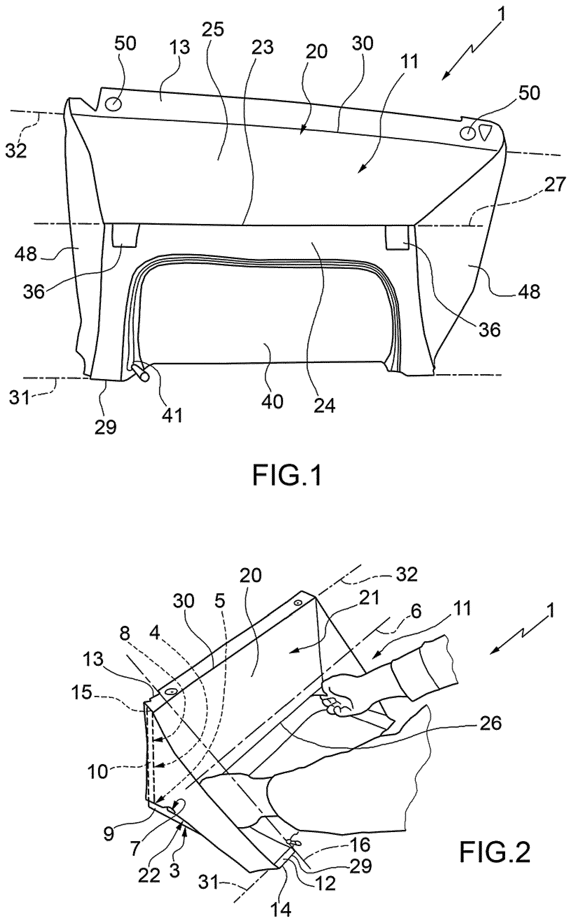

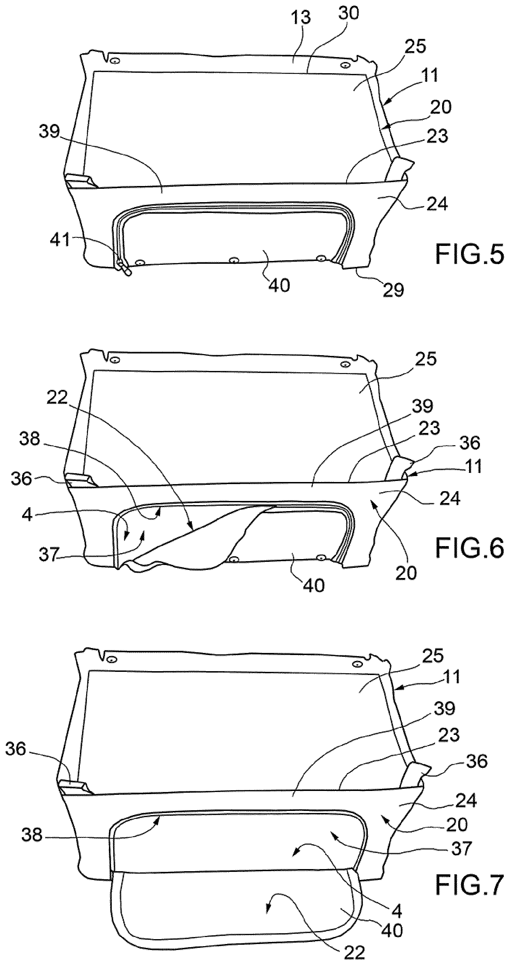

In Figures 1 and 5, the reference number 1 indicates an object-holder device, which is convertible between a first operating condition (Fig. 5), in which it defines a glove box compartment, preferably of a parallelepiped shape, and a second operating condition (Fig. 1), in which it is folded so as to eliminate the glove box compartment, which, therefore, is of the concealed type. In particular, in the second operating condition, the device 1 defines a covering of a bracket for supporting objects, or a covering of a recess suitable for housing these objects.

As can be seen in Figure 2, the device 1 comprises a support structure 3 having a front surface 4 shaped so as to define a cavity or recess 5 elongated along a direction 6 which is substantially horizontal. In particular, the front surface 4 of the structure 3 has an L-shaped side profile, when sectioned with section planes orthogonal to direction 6, therefore, the cavity 5 has a base surface 7, defining a substantially horizontal shelf or bracket, and an abutment surface 8 transverse to the base surface and defining a substantially vertical shoulder. In particular, the structure 3 consists of two walls 9 and 10 orthogonal and fixed to each other, and defining, respectively, the base surface 7 and the abutment surface 8.

According to a variation, not shown, the walls 9 and 10 are hinged to one another about an axis parallel to direction 6 in order to be able to close and compact the device 1 when the latter is configured in the second operative condition. The walls 9 and 10 are locked in positions orthogonal to one another by a retaining system of the releasable type in order to maintain the first operating condition during use.

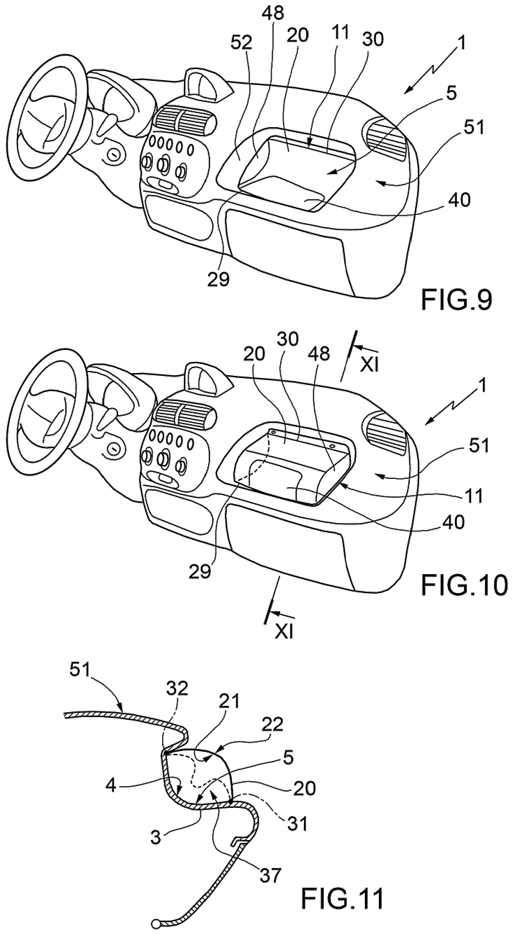

According to further variations, the cross section of the front surface 4 has a concave shape different from the L shape (for example, a shape such as that shown in Figure 11) .

The device 1 also comprises a lining 11, which is made of a flexible or foldable sheet material, for example fabric, leather, artificial leather, etc. The material of the lining 11 can be of the monolayer or multilayer type. Optionally, the flexible material of the lining 11 may define a network.

The lining 11 is fixed to the structure 3 in a known manner, which is not described in detail, and comprises two end flaps 12 and 13 arranged on the structure 3 in fixed positions next to respective regions 14 and 15. The latter are spaced apart along a direction 16 orthogonal to direction 6 and thus are arranged on opposite sides of the cavity 5. In the particular example illustrated, the areas 14 and 15 are defined, respectively, by the ends of the walls 9 and 10.

The lining 11 comprises a cover portion 20 having an outer surface 21 and an inner surface 22 opposite to each other. The surface 22 faces the front surface 4.

With reference to Figure 1, the cover portion 20 consists of an intermediate area 23 and two areas 24 and 25, which are substantially flat when the device 1 is in the above-mentioned first or second operating condition. The area 23 joins together the areas 24 and 25 and defines a virtual hinge so as to be able to fold the areas 24 and 25 relative to each other around a rectilinear axis 27, which is preferably parallel to direction 6.

The lining 11 further comprises two folding portions 29 and 30, which are arranged on opposite sides of the cover portion 20 and in positions adjacent to the flaps 12 and 13, respectively. In particular, the portions 29 and 30 join the area 24 to the flap 12 and the area 25 to the flap 13. The portions 29 and 30 define virtual hinges to allow the cover portion 20 to be folded with respect to the flaps 12, 13 and to the structure 3 about respective folding axes 31 and 32, which are preferably parallel to direction 6 and to the axis 27.

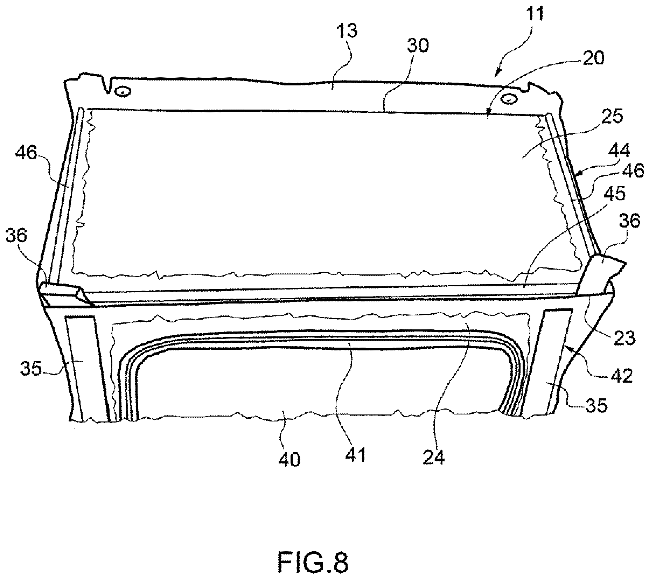

According to one aspect of the present invention, with reference to Figure 8, the device 1 also comprises elastically deformable elements 35, which are associated with the cover portion 20 and are of the bistable type, i.e. they can take on two differently shaped, stable configurations, arranged on opposite sides of an intermediate dead-point configuration, which, instead, is unstable (shown as a dashed line in the example of Figure 11). Once beyond the intermediate dead-point configuration, the elements 35 automatically snap into one of the two stable configurations. In these two configurations, if no force is applied from the outside on the lining 11 and the elements 35, the elements 35 have sufficient rigidity to maintain the device 1 in the two operating conditions mentioned above, so as to prevent the lining 11 from sagging unpredictably. A pressure or traction exerted with sufficient force on the cover portion 20, in a direction orthogonal to direction 6, allows for passing through the intermediate dead-point configuration and then switching the elements 35 between the two stable configurations.

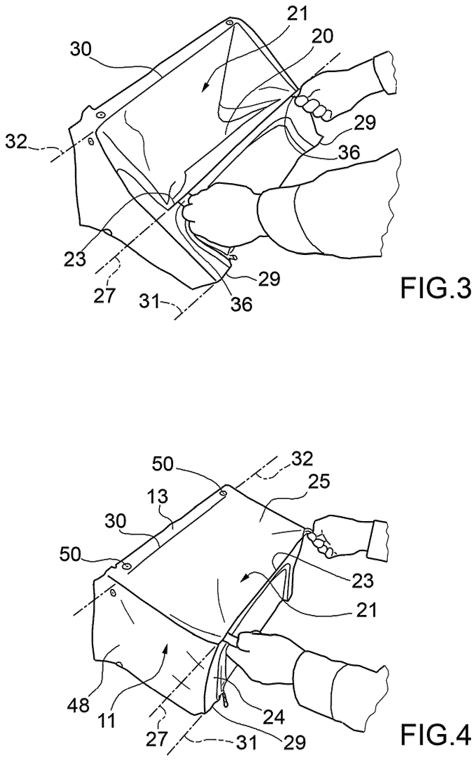

Preferably, as shown in Figure 3, the lining 11 comprises two gripping elements 36 which are fixed to the cover portion 20, for example by means of seams, and project from the outer surface 21 so that they can be gripped by a user. Preferably, the gripping elements 36 are arranged along the area 23. Alternatively or in combination with the solution shown, a gripping element may be provided centrally in a direction parallel to the axes 27,31,32. For example, said gripping element is defined by a handle.

As can be seen in Figure 3, the user, by gripping the gripping elements 36 and applying a slight traction force, can easily pull the lining 11 so as to pass the intermediate dead-point configuration and thereby achieve the first operating condition.

As can be seen in Figure 2, in the second operating condition, the inner surface 22 of the cover portion 20 is substantially lying on the front surface 4 of the structure 3, therefore the cover portion 20 defines an aesthetic covering for the cavity 5 on the structure 3. In this operating condition, it appears that the front surface 3 defines an "in-sight" or "fully visible" support for any object, and the cavity 5 houses such objects.

With reference to Figures 6 and 7, in the first operating condition, as mentioned above, the inner surface 22 of the cover portion 20 is spaced from the front surface 4 so as to define an inner compartment 37 which is sufficiently large to house one or more objects. Preferably, the structure 3 and/or the lining 11 are provided with aeration holes (not shown) which put the inner compartment 37 into communication with the external environment in order to avoid formation of a depression or a counter-pressure in the inner compartment 37 when the cover portion 20 is pulled or pressed, respectively, to change the operating condition.

According to a preferred aspect of the present invention, the area 24 has an opening 38, which allows a user to access the inner compartment 37. The area 24 is constituted by a sector 39, defining at least part of the edge of the opening 38, and by a door 40, which is movable with respect to the sector 39 so as to open and close the opening 38. Advantageously, the door 40 is joined to the remaining part of the lining 11 by means of a coupling portion defining a virtual hinge.

According to variations, not shown, the opening 38 is formed in the cover portion 20 in different positions and/or with different shapes with respect to those shown in Figures 6 and 7.

As can be seen in Figure 5, the lining 11 comprises a closing system or a retaining system 41, which couples the door 40 to the edge of the opening 38 to keep the latter closed, and is releasable so as to be able to open the door 40. In particular, the system 41 is defined by one or more hinges, but other similar systems could be used (Velcro elements, press studs, hooks, magnets).

In the particular example illustrated in Figure 8, the elements 35 form part of a frame 42, which is separate from the lining 11, is made for example of plastic or metallic material and is fixed to the cover portion 20, in a manner not shown, for example by means of seams. In particular, the frame 42 is arranged on the inner surface 22 or is embedded in the material of the cover portion 20.

According to an alternative, not shown, the elements 35 are defined by a material of the lining 11, for example by a layer of elastic material, and preferably there is no additional frame coupled to the lining 11.

Preferably, the elements 35 are defined by two elastic laminas that are applied to the sector 39 in the area 24 and are elongated in directions orthogonal to the axes 27 and 31. In the particular example shown, these laminas are separated from each other and are arranged on opposite sides of the opening 38. According to a variation, not shown, a single elastic lamina is provided.

Advantageously, the frame 42 also comprises a stiffening element 44 (shown schematically) coupled to the area 25 in a fixed position. Preferably, the stiffening element 44 is defined by a U-shaped frame, separated from the elements 35 and comprising at least one bar 45 that is substantially parallel to the axis 27, and therefore to direction 6 and extends throughout the length of the cover portion 20. In particular, the bar 45 is arranged alongside the area 23 to stiffen this area 23. The U-shaped frame comprises two arms 46, which project transversely from opposite ends of the bar 45 towards the portion 30, and preferably, extend throughout the depth of the area 25. Advantageously, the arms 46 have a certain bending elasticity so as to be able to perform the same bistable function as the elements 35 and cooperate with the latter in maintaining the lining 11 in the first and second operating conditions.

According to a variation, not shown, the stiffening element 44 is defined by a plate. For instance, this plate may comprise a layer of plastic material locally stiffened by one or more metal elements. Preferably, these metal elements are arranged in a position adjacent to the area 23 for stiffening the latter.

As mentioned above for the opening 38, the positions of the areas 24 and 25 could be mutually exchanged with respect to what is illustrated.

With reference to Figure 4, the inner compartment 37 is laterally delimited by two sides 48, only one of which can be seen in this Figure. The sides 48 are transverse to the folding axes 27, 31 and 32 and are defined by respective lateral portions of the lining 11. These lateral portions are stretched out when the device 1 is configured in the first operating condition. In the second operating condition (Figure 2), instead, the lateral portions of the lining 11 are folded back on themselves, substantially halfway, when the device 1 is configured in the second operating condition. In the latter case, as can be seen in Figure 2, the sides 48 laterally define the cavity 5.

Preferably, the device 1 is specifically designed to be installed on a motor vehicle, possibly as an optional extra. For this purpose, the device 1 is transportable, for example as a box or as a bag for carrying objects or as a carrier for the transport of animals, and comprises an attachment system 50 configured so that it can be coupled in a fixed position and in a releasable manner to a corresponding attachment system (not shown) provided on the motor vehicle. In the example shown in the accompanying figures, the attachment system 50 is defined by press studs, for instance arranged on the flaps 12 and/or 13. However, other similar attachment systems (for example Velcro elements, hinges, hooks, magnets) can be provided on the lining 11 and/or on the structure 3, even in different positions from that indicated by way of example. Preferably, the motor vehicle has a number of areas provided with the same attachment system, where the structure 3 can be rested and fixed, as an alternative to each other, according to the user's needs.

According to an alternative, not shown, the structure 3 is provided with an attachment system of the "Isofix" type to connect the device 1 in a releasable manner and in a fixed position to the rear seats of the motor vehicle.

Figures 9 to 15 show how the device 1 may be integrated into a component of the motor vehicle, as the structure 3 forms part of this component.

In the example of Figures 9, 10 and 11, the structure 3 constitutes a part of a dashboard 51. According to an alternative, not shown, one of the two sides 48 may be defined by a portion 52 of the dashboard 51.

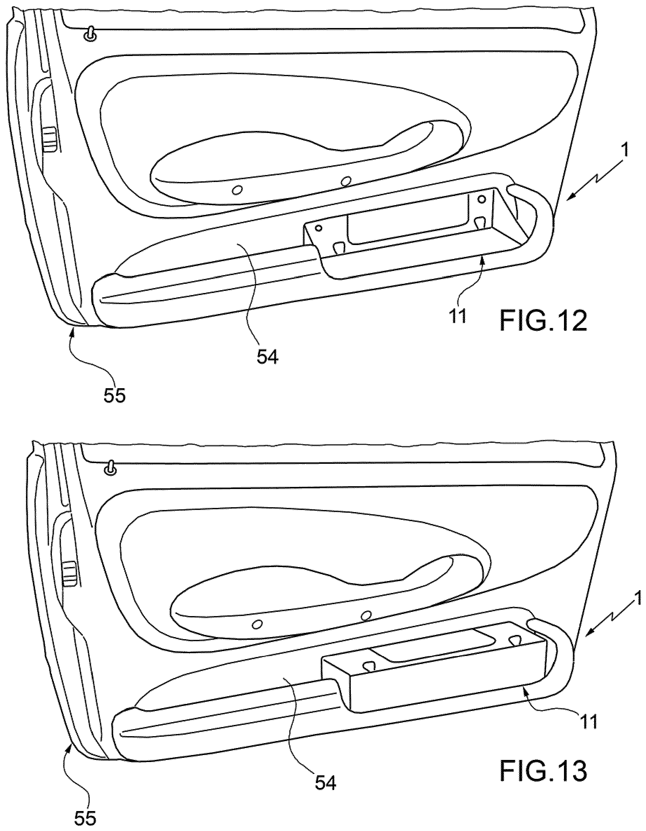

In the example of Figures 12 and 13, the structure 3 forms part of a panel 54, which covers the inside of a lateral door 55 of the motor vehicle.

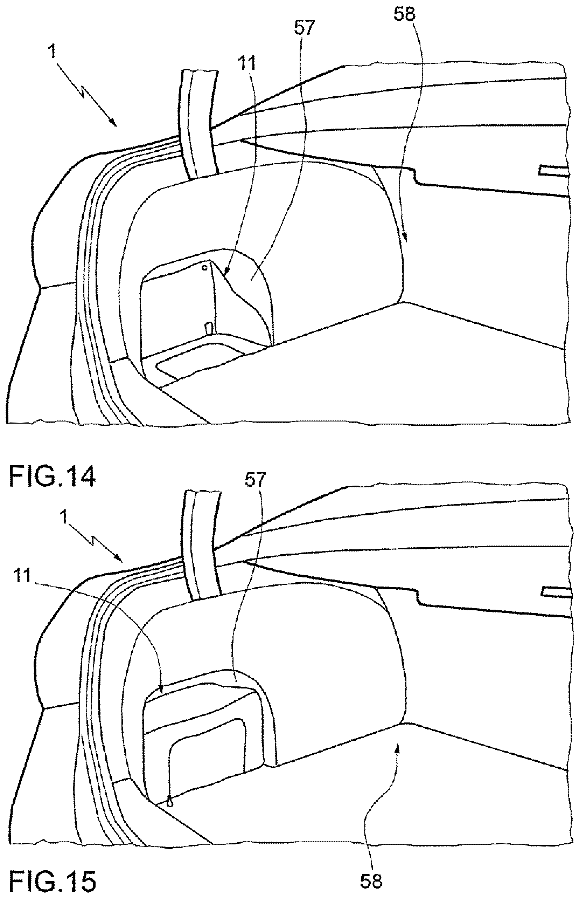

In the example of Figures 14 and 15, the structure 3 forms part of a panel 57, which covers a side of a boot 58 of the motor vehicle.

In these cases, the structure 3 is integrated into the components of the motor vehicle and is not detachable, therefore, the device 1 can not be used as a bag or as a transportable box. At the same time, the lining 11 alone could be detachable and, in particular, it could be fixed interchangeably to various structures 3 forming part of different components of the motor vehicle, according to the user's needs.

From the foregoing it appears that the device 1 allows for obtaining an inner compartment 37, which is totally not visible from the outside and can be fully made to disappear by pressing the lining 11 to achieve the second operating condition, in which the lining 11 itself covers the structure 3 so as to preferably perform an aesthetic function.

Furthermore, it is clear that the device 1 is easy to use, is relatively simple and compact and is constituted by a relatively low number of components, while the inner compartment 37 is relatively capacious.

Other advantages also appear from the specific features described above with reference to the accompanying drawings.

Lastly, it is clear that the device 1 described herein and illustrated in the accompanying drawings can be subject to modifications and variations without however departing from the scope of protection of the present invention, as defined in the appended claims.

In particular, the cover portion 20 of the lining 11 could be provided with fan-folded portions to be able to increase its extension from the portion 29 to the portion 30 when passing from the second to the first operating condition.

Moreover, the inner compartment 37 could have a shape and/or dimensions different from what is illustrated by way of example, also as a function of the position and orientation of the axes 31,32 and of the possible presence of one or more axes 27 at intermediate virtual hinges.

In addition, the lining 11 could comprise more rigid portions in addition to flexible and foldable portions.

## Claims

1. A convertible object-holder device (1) comprising:
- a support structure (3) having a front surface (4);
- a lining (11), which is foldable and is coupled in fixed positions to coupling areas (14,15) of said support structure (3); said lining comprising:
a) a cover portion (20) facing said front surface (4) ;
b) two folding portions (29,30) arranged on opposite sides of said cover portion (20) in positions adjacent, respectively, to said coupling areas (14, 15) and defining respective virtual hinges about respective folding axes (31,32), to allow a user to move said cover portion (20) with respect to said support structure (3);
- elastically deformable means (35), which are associated with said cover portion (20) and are bistable so as to take on two different configurations, corresponding respectively to:
a) a first operating condition, wherein said cover portion (20) is spaced from said front surface (4), so as to define an object-holder compartment (37), and has an opening (38) which allows the user to access said object-holder compartment (37), and
b) a second operating condition, wherein said cover portion (20) is substantially lying on said front surface (4);
said cover portion (20) comprising a door (40), which is movable with respect to the remaining part of said lining (11) so as to open and close said opening (38); **characterised in that** said cover portion (20) further comprises:
- an intermediate area (23) defining a virtual hinge about a further folding axis (27);
- a first and a second area (24,25), which are arranged on opposite sides of said intermediate area (23) and are substantially flat and transverse to each other in the first and second operating conditions.

2. The device according to claim 1, **characterised in that** said lining (11) comprises retaining means (41) to keep said opening (38) closed by means of said door (40); said retaining means (41) being manually releasable by the user to open said opening (38).

3. The device according to claim 1 or 2, **characterised in that** said door (40) is joined to the remaining part of said lining (11) by means of a coupling portion defining a virtual hinge.

4. The device according to any one of the preceding claims, **characterised in that** it comprises gripping means (36) which project from an outer surface (21) of said cover portion (22) so that they can be gripped by the user.

5. The device according to any one of the preceding claims, **characterised in that** said folding axes (31,32) are rectilinear; said object-holder compartment (37) being delimited laterally by two sides (47), which are transverse to said folding axes (31,32); at least one of said sides (48) being defined by a lateral portion of said lining (11) .

6. The device according to claim 5, **characterised in that** both said sides (48) are defined by lateral portions of said lining (11).

7. A device according to claim 5 or 6, **characterised in that** said folding axes (31,32) are parallel to each other.

8. The device according to claim 1, **characterised in that** said first area (24) is made of a first part (39) defining an edge of said opening (38) and a second part defining said door (40).

9. The device according to any of the preceding claims, **characterised in that** it comprises at least one stiffening element (45) coupled with said cover portion (20).

10. The device according to claim 9, **characterised in that** said stiffening element is defined by a plate.

11. The device according to claim 9, **characterised in that** said stiffening element is defined by a bar (45) substantially parallel to said folding axes.

12. The device according to claim 11, **characterised in that** said bar (45) forms part of a U-shaped frame, coupled to said cover portion (20).

13. The device according to claim 12, **characterised in that** said U-shaped frame comprises two arms (46), which project transversally from opposite ends of said bar (45) and constitute part of said elastically deformable means.

14. The device according to any one of the preceding claims, **characterised in that** said elastically deformable means comprise at least one lamina (35) which is elastically deformable when subject to bending.

15. The device according to claim 14, **characterised in that** said elastically deformable means comprise two laminas (35) which are spaced and arranged on opposite sides of said opening (38).

16. The device according to any one of claims 1 to 12, **characterised in that** said elastically deformable means are defined by a material of said cover portion (20).

17. The device according to any one of the preceding claims, **characterised in that** said support structure (3) and/or said lining (11) are provided with aeration holes which establish communication between said object-holder compartment (37) and the external environment.

18. The device according to any one of the preceding claims, **characterised in that** it comprises first attachment means (50) configured so as to be coupled in a fixed position and in a releasable manner with corresponding second attachment means provided on a motor vehicle.

19. The device according to claim 18, **characterised in that** said first attachment means (6) are arranged along at least one end tab (12,13) of said lining (11).

20. The device according to any one of claims 1 to 17, **characterised in that** said attachment structure (3) defines part of a motor vehicle component (51;54;57).

## Patentansprüche

1. Umrüstbare Objekthaltervorrichtung (1), umfassend:
- eine Trägerstruktur (3), die eine vordere Oberfläche (4) aufweist;
- eine Verkleidung (11), welche faltbar ist und an festen Positionen mit Kopplungsbereichen (14, 15) der Trägerstruktur (3) gekoppelt ist; wobei die Verkleidung umfasst:
a) einen Abdeckungsabschnitt (20), der zur vorderen Oberfläche (4) weist;
b) zwei klappbare Abschnitte (29, 30), die auf gegenüberliegenden Seiten des Abdeckungsabschnitts (20) an Positionen, die jeweils den Kopplungsbereichen (14, 15) benachbart sind, angeordnet sind und jeweilige virtuelle Angelpunkte um jeweilige Faltachsen (31, 32) zu definieren, um einem Benutzer zu ermöglichen, den Abdeckungsabschnitt (20) in Bezug auf die Trägerstruktur (3) zu bewegen;
- elastisch verformbare Mittel (35), welche dem Abdeckungsabschnitt (20) zugeordnet und bistabil sind, damit sie zwei verschiedene Ausgestaltungen annehmen, welche jeweils Folgendem entsprechen:
a) einem ersten Betriebszustand, wobei der Abdeckungsabschnitt (20) von der vorderen Oberfläche (4) beabstandet ist, um so ein Objekthalterfach (37) zu definieren, und eine Öffnung (38) aufweist, welche dem Benutzer ermöglicht, auf das Objekthalterfach (37) zuzugreifen, und
b) einen zweiten Betriebszustand, wobei der Abdeckungsabschnitt (20) im Wesentlichen auf der vorderen Oberfläche (4) liegt;
wobei der Abdeckungsabschnitt (20) eine Klappe (40) umfasst, welche im Bezug auf den verbleibenden Teil der Verkleidung (11) bewegt werden kann, um so die Öffnung (38) zu öffnen und zu schließen;
**dadurch gekennzeichnet, dass** der Abdeckungsabschnitt (20) ferner umfasst:
- einen Zwischenbereich (23), der einen virtuellen Angelpunkt um eine weitere Faltachse (27) definiert;
- einen ersten und einen zweiten Bereich (24, 25), welche auf gegenüberliegenden Seiten des Zwischenbereichs (23) angeordnet sind und im Wesentlichen flach und zueinander querlaufend in dem ersten und dem zweiten Betriebszustand sind.

2. Vorrichtung nach Anspruch 1, **dadurch gekennzeichnet, dass** die Verkleidung (11) Haltemittel (41) umfasst, um die Öffnung (38), die mittels der Klappe (40) geschlossen wird, zu halten; wobei die Haltemittel (41) durch den Benutzer manuell gelöst werden können, um die Öffnung (38) zu öffnen.

3. Vorrichtung nach Anspruch 1 oder 2, **dadurch gekennzeichnet, dass** die Klappe (40) mittels eines Kopplungsabschnitts, der einen virtuellen Angelpunkt definiert, mit dem verbleibenden Teil der Verkleidung (11) verbunden ist.

4. Vorrichtung nach einem der vorhergehenden Ansprüche, **dadurch gekennzeichnet, dass** sie Greifmittel (36) umfasst, die von einer äußeren Oberfläche (21) des Abdeckungsabschnitts (22) vorragen, so dass sie von dem Benutzer ergriffen werden können.

5. Vorrichtung nach einem der vorhergehenden Ansprüche, **dadurch gekennzeichnet, dass** die Faltachsen (31, 32) geradlinig sind; wobei das Objekthalterfach (37) seitlich von zwei Seiten (47) begrenzt wird, welche querlaufend zu den Faltachsen (31, 32) sind; wobei mindestens eine der Seiten (48) durch einen seitlichen Abschnitt der Verkleidung (11) definiert wird.

6. Vorrichtung nach Anspruch 5, **dadurch gekennzeichnet, dass** beide Seiten (48) durch seitliche Abschnitte der Verkleidung (11) definiert werden.

7. Vorrichtung nach Anspruch 5 oder 6, **dadurch gekennzeichnet, dass** die Faltachsen (31, 32) parallel zueinander sind.

8. Vorrichtung nach Anspruch 1, **dadurch gekennzeichnet, dass** der erste Bereich (24) aus einem ersten Teil (39), der einen Rand der Öffnung (38) definiert, und einem zweiten Teil besteht, der die Klappe (40) definiert.

9. Vorrichtung nach einem der vorhergehenden Ansprüche, **dadurch gekennzeichnet, dass** sie mindestens ein Aussteifungselement (45) umfasst, welches mit dem Abdeckungsabschnitt (20) gekoppelt ist.

10. Vorrichtung nach Anspruch 9, **dadurch gekennzeichnet, dass** das Aussteifungselement durch eine Platte definiert wird.

11. Vorrichtung nach Anspruch 9, **dadurch gekennzeichnet, dass** das Aussteifungselement durch eine Stange (45) definiert wird, die im Wesentlichen parallel zu den Faltachsen ist.

12. Vorrichtung nach Anspruch 11, **dadurch gekennzeichnet, dass** die Stange (45) einen Teil eines U-förmigen Rahmens ausbildet, der mit dem Abdeckungsabschnitt (20) gekoppelt ist.

13. Vorrichtung nach Anspruch 12, **dadurch gekennzeichnet, dass** der U-förmige Rahmen zwei Arme (46) umfasst, welche in Querrichtung von gegenüberliegenden Enden der Stange (45) vorragen und einen Teil der elastisch verformbaren Mittel darstellen.

14. Vorrichtung nach einem der vorhergehenden Ansprüche, **dadurch gekennzeichnet, dass** die elastisch verformbaren Mittel mindestens eine Lamelle (35) umfassen, die elastisch verformbar ist, wenn er einem Biegen ausgesetzt wird.

15. Vorrichtung nach Anspruch 14, **dadurch gekennzeichnet, dass** die elastisch verformbaren Mittel zwei Lamellen (35) umfassen, welche beabstandet sind und auf gegenüberliegenden Seiten der Öffnung (38) angeordnet sind.

16. Vorrichtung nach einem der Ansprüche 1 bis 12, **dadurch gekennzeichnet, dass** die elastisch verformbaren Mittel durch ein Material des Abdeckungsabschnitts (20) definiert sind.

17. Vorrichtung nach einem der vorhergehenden Ansprüche, **dadurch gekennzeichnet, dass** die Trägerstruktur (3) und/oder die Verkleidung (11) mit Belüftungslöcher versehen sind, welche die Kommunikation zwischen dem Objekthalterfach (37) und dem externen Umfeld herstellen.

18. Vorrichtung nach einem der vorhergehenden Ansprüche, **dadurch gekennzeichnet, dass** sie erste Befestigungsmittel (50) umfasst, die so ausgestaltet sind, um in einer festen Position und in einer entfernbaren Weise mit entsprechenden zweiten Befestigungsmitteln, die an einem Kraftfahrzeug vorgesehen sind, zu koppeln.

19. Vorrichtung nach Anspruch 18, **dadurch gekennzeichnet, dass** die ersten Befestigungsmittel (6) entlang mindestens einer Endlasche (12, 13) der Verkleidung (11) angeordnet sind.

20. Vorrichtung nach einem der Ansprüche 1 bis 17, **dadurch gekennzeichnet, dass** die Befestigungsstruktur (3) einen Teil einer Kraftfahrzeugkomponente (51; 54; 57) definiert.

## Revendications

1. Dispositif porte-objet convertible (1) comprenant :
- une structure de support (3) ayant une surface avant (4) ;
- un revêtement (11), qui peut être plié et est couplé dans des positions fixes à des zones d'accouplement (14, 15) de ladite structure de support (3) ; ledit revêtement comprenant :
a) une partie couvercle (20) faisant face à ladite surface avant (4) ;
b) deux parties de pliage (29, 30) agencées sur des côtés opposés de ladite partie couvercle (20) dans des positions adjacentes, respectivement, auxdites zones d'accouplement (14, 15) et définissant des charnières virtuelles respectives autour d'axes de pliage respectifs (31, 32), pour permettre à un utilisateur de déplacer ladite partie couvercle (20) par rapport à ladite structure de support (3) ;
- un moyen élastiquement déformable (35), qui est associé à ladite partie couvercle (20) et est bistable de manière à prendre deux configurations différentes, correspondant respectivement à :
a) un premier état de fonctionnement, dans lequel ladite partie couvercle (20) est espacée de ladite surface avant (4), de manière à définit un compartiment porte-objet (37), et comporte une ouverture (38) qui permet à l'utilisateur d'accéder audit compartiment porte-objet (37), et
b) un second état de fonctionnement, dans lequel ladite partie couvercle (20) repose sensiblement sur ladite surface avant (4) ;
ladite partie couvercle (20) comprenant une porte (40), qui est mobile par rapport à la partie restante dudit revêtement (11) de manière à ouvrir et fermer ladite ouverture (38) ;
**caractérisé en ce que** ladite partie couvercle (20) comprend en outre :
- une zone intermédiaire (23) définissant une charnière virtuelle autour d'un axe de pliage supplémentaire (27) ;
- une première et une seconde zone (24, 25), qui sont agencées sur des côtés opposés de ladite zone intermédiaire (23) et sont sensiblement plates et transversales l'une à l'autre dans les premier et second états de fonctionnement.

2. Dispositif selon la revendication 1, **caractérisé en ce que** ledit revêtement (11) comprend un moyen de retenue (41) pour maintenir ladite ouverture (38) fermée à l'aide de ladite porte (40) ; ledit moyen de retenue (41) pouvant être manuellement libéré par l'utilisateur pour ouvrir ladite ouverture (38).

3. Dispositif selon la revendication 1 ou 2, **caractérisé en ce que** ladite porte (40) est jointe à la partie restante dudit revêtement (11) à l'aide d'une partie d'accouplement définissant une charnière virtuelle.

4. Dispositif selon l'une quelconque des revendications précédentes, **caractérisé en ce qu'**il comprend un moyen de préhension (36) qui se projette depuis une surface extérieure (21) de ladite partie couvercle (22) de telle sorte qu'il puisse être saisi par l'utilisateur.

5. Dispositif selon l'une quelconque des revendications précédentes, **caractérisé en ce que** lesdits axes de pliage (31, 32) sont rectilignes ; ledit compartiment porte-objet (37) étant délimité latéralement par deux côtés (47), qui sont transversaux auxdits axes de pliage (31, 32) ; au moins un desdits côtés (48) étant défini par une partie latérale dudit revêtement (11).

6. Dispositif selon la revendication 5, **caractérisé en ce que** lesdits deux côtés (48) sont définis par des parties latérales dudit revêtement (11) .

7. Dispositif selon la revendication 5 ou 6, **caractérisé en ce que** lesdits axes de pliage (31, 32) sont parallèles entre eux.

8. Dispositif selon la revendication 1, **caractérisé en ce que** ladite première zone (24) est composée d'une première partie (39) définissant un bord de ladite ouverture (38) et d'une seconde partie définissant ladite porte (40).

9. Dispositif selon l'une quelconque des revendications précédentes, **caractérisé en ce qu'**il comprend au moins un élément de raidissement (45) couplé à ladite partie couvercle (20).

10. Dispositif selon la revendication 9, **caractérisé en ce que** ledit élément de raidissement est défini par une plaque.

11. Dispositif selon la revendication 9, **caractérisé en ce que** ledit élément de raidissement est défini par une barre (45) sensiblement parallèle auxdits axes de pliage.

12. Dispositif selon la revendication 11, **caractérisé en ce que** ladite barre (45) forme une partie d'un cadre en forme de U, couplé à ladite partie couvercle (20) .

13. Dispositif selon la revendication 12, **caractérisé en ce que** ledit cadre en forme de U comprend deux bras (46), qui se projettent transversalement depuis des extrémités opposées de ladite barre (45) et constituent une partie dudit moyen élastiquement déformable.

14. Dispositif selon l'une quelconque des revendications précédentes, **caractérisé en ce que** ledit moyen élastiquement déformable comprend au moins une lame (35) qui est élastiquement déformable quand elle est soumise au cintrage.

15. Dispositif selon la revendication 14, **caractérisé en ce que** ledit moyen élastiquement déformable comprend deux lames (35) qui sont espacées et agencées sur des côtés opposés de ladite ouverture (38) .

16. Dispositif selon l'une quelconque des revendications 1 à 12, **caractérisé en ce que** ledit moyen élastiquement déformable est défini par un matériau de ladite partie couvercle (20).

17. Dispositif selon l'une quelconque des revendications précédentes, **caractérisé en ce que** ladite structure de support (3) et/ou ledit revêtement (11) sont pourvus de trous d'aération qui établissent une communication entre ledit compartiment porte-objet (37) et l'environnement externe.

18. Dispositif selon l'une quelconque des revendications précédentes, **caractérisé en ce qu'**il comprend un premier moyen de fixation (50) configuré de manière à être couplé dans une position fixe et d'une manière libérable à un second moyen de fixation correspondant situé sur un véhicule motorisé.

19. Dispositif selon la revendication 18, **caractérisé en ce que** ledit premier moyen de fixation (6) est agencé le long d'au moins une languette d'extrémité (12, 13) dudit revêtement (11).

20. Dispositif selon l'une quelconque des revendications 1 à 17, **caractérisé en ce que** ladite structure de fixation (3) définit une partie d'un composant (51 ; 54 ; 57) de véhicule motorisé.
